# EUROPÄISCHE PATENTANMELDUNG

(11) **EP 4 818 557 A1**
(43) Veröffentlichungstag der Anmeldung: **07.10.2026**
(21) Anmeldenummer: 26163426.5
(22) Anmeldetag: 10.03.2026
(51) Int. Cl.: F16H 61/02

(54) **ARBEITSMASCHINE UND VERFAHREN ZUR VERZÖGERUNG DER ARBEITSMASCHINE**

(30) Priorität: 04.04.2025 DE 102025113398
(71) Anmelder: ZF CV Systems Global GmbH, 3006 Bern (CH)
(72) Erfinder: Brutt, Mirko, 31832 Springe (DE); Hauschild, Tobias, 30926 Seelze (DE)
(74) Vertreter: ZF Friedrichshafen AG

(57) **Zusammenfassung**

Die Erfindung betrifft eine Arbeitsmaschine (1), umfassend einen Joystick (2) zur Steuerung einer Verzögerung der Arbeitsmaschine (1), ein Getriebe (3), das in einem Antriebsstrang der Arbeitsmaschine (1) angeordnet und über eine Fahrkupplung (4) mit mehreren Rädern (5) der Arbeitsmaschine (1) antriebswirksam verbindbar ist, Sensoren (6) zum Erfassen von Raddrehzahlen an den Rädern (5) der Arbeitsmaschine (1) und eine elektronische Steuereinheit (7), die mit dem Joystick (2), dem Getriebe (3), der Fahrkupplung (4) und den Sensoren (6) signalübertragend ist Ferner betrifft die Erfindung ein Verfahren zur Verzögerung der Arbeitsmaschine (1), umfassend folgende Schritte: Erfassen einer Auslenkung des Joysticks (2) aus der Neutralposition, Verzögern der Arbeitsmaschine (1) nach Maßgabe der Auslenkung des Joysticks (2) durch eine Änderung einer Übersetzung eines Getriebes (3), das im Antriebsstrang der Arbeitsmaschine (1) angeordnet und über eine Fahrkupplung (4) mit Rädern (5) der Arbeitsmaschine (1) antriebswirksam verbindbar ist, und Überwachen von Raddrehzahlen mittels einer elektronischen Steuereinheit (7), die mit Sensoren (6) zum Erfassen von Raddrehzahlen an den Rädern (5) der Arbeitsmaschine (1) signalübertragend verbunden ist, wobei die Fahrkupplung (4) geöffnet wird, wenn ein Schwellwert für mindestens eine Raddrehzahl einem kritischen Fahrzustand zugeordnet wird, wodurch die Räder (5) der Arbeitsmaschine (1) vom Antriebsstrang entkoppelt werden.

## Beschreibung

Die Erfindung betrifft eine Arbeitsmaschine und ein Verfahren zur Verzögerung der Arbeitsmaschine. Unter einer Arbeitsmaschine ist ein Offroad-Fahrzeug, beispielsweise ein Traktor, ein Mähdrescher, eine Erntemaschine, eine Forstmaschine, ein Radlader, ein Bagger, ein Grader, ein Telehandler, eine Landmaschine, eine Baumaschine, eine Materialtransportmaschine oder ein Gabelstapler zu verstehen, welches primär für die Ausführung technischer, insbesondere mechanischer Arbeitsvorgänge konzipiert ist. Arbeitsmaschinen verfügen neben wenigstens einem Antriebsstrang außerdem über steuerbare Arbeitseinrichtungen, die zur Durchführung spezialisierter Aufgaben im landwirtschaftlichen, forstwirtschaftlichen, industriellen oder bautechnischen Umfeld eingesetzt werden. Eine Arbeitsmaschine ist ausdrücklich kein herkömmliches Onroad-Fahrzeug, wie beispielsweise ein Pkw, Lkw oder Bus, das primär für den Transport von Personen oder Gütern auf öffentlichen Straßen konzipiert ist.

Beispielsweise offenbart US 2004/0100145 A1 eine Vorrichtung zur Veränderung der Bremsreaktion eines Fahrzeugs, umfassend eine Bremsbedienvorrichtung, die innerhalb eines Bereichs von Bremsbedienvorrichtungspositionen beweglich ist und so ausgelegt ist, dass sie ein Brems-Eingangssignal als Reaktion auf einen Fahrer-Bremsbefehl erzeugt; eine Bremse, die die Bewegung des Fahrzeugs als Reaktion auf ein Brems-Ausgangssignal hemmt; ein Getriebe mit mehreren Gängen, das so ausgelegt ist, dass es ein Getriebe-Gangsignal als Reaktion auf einen ausgewählten Gang erzeugt; und ein elektronisches Steuerungsmodul, das das Brems-Eingangssignal und das Getriebe-Gangsignal empfängt und daraufhin ein Brems-Ausgangssignal erzeugt, wobei die Position der Bremsbedienvorrichtung innerhalb des Bereichs der Bremsbedienvorrichtungspositionen das Vorhandensein und die Stärke des Brems-Ausgangssignals bestimmt.

Ferner offenbart EP 2 424 758 B1 ein Fahrzeug mit einem Steuer- oder Regelsystem mit einer elektronischen Getriebeschaltung, wobei das System ein Getriebe mit mehreren Übersetzungen aufweist, welches geeignet ausgebildet ist, um mit einem ausgewählten Übersetzungsverhältnis zwischen einem Eingang und einem Ausgang Leistung von einem Motor zu angetriebenen Rädern des Fahrzeugs zu übertragen, mit einem die Geschwindigkeit des Motors sensierenden Organ und einer Benutzer-Interface-Einrichtung, die betrieblich mit einem Controller verbunden ist und zum Hochschalten und Herunterschalten des gewählten Übersetzungsverhältnisses des Getriebes in Abhängigkeit von Befehlen oder Vorgaben eines Fahrers vorgesehen ist. Das System ist in einem Modus zur Vermeidung einer zu hohen Geschwindigkeit des Motors betreibbar, wenn die Geschwindigkeit des Motors einen vorbestimmten Schwellwert überschreitet, wobei in diesem Modus ein Herunterschalten des Übersetzungsverhältnisses vermieden wird und ein Rad des Fahrzeugs und/oder ein befestigtes oder ein angehängtes Fahrzeug in Abhängigkeit von einem Befehl des Fahrers zum Herunterschalten abgebremst wird.

Ferner offenbart EP 3 561 635 B1 ein Verfahren zum Steuern eines Fahrzeugs, das einen relativen Antriebsstrang, relative Bremseinrichtungen und relative Lenkeinrichtungen aufweist, wobei das Verfahren auf einem Joystick basiert, der einen im Fahrzeug angeordneten Hebel zum Identifizieren einer Vorwärtsneigung und einer Rückwärtsneigung parallel zu einer Längserstreckung des Fahrzeugs zum Zusammenwirken mit dem Antriebsstrang und mit den Bremseinrichtungen, und zweier Seitenneigungen nach links und nach rechts zum Zusammenwirken mit den Lenkeinrichtungen zum Bestimmen einer Trajektorie des Fahrzeugs aufweist. Gemäß einem ersten Betriebszustand weist das Verfahren einen ersten Schritt zum jeweiligen Zuordnen der Vorwärtsneigung und der Rückwärtsneigung zu einer proportionalen Vorwärts- und Rückwärtsbeschleunigung des Fahrzeugs auf, wobei das Verfahren gemäß einem zweiten Betriebszustand einen zweiten Schritt zum jeweiligen Zuordnen der Vorwärts- und der Rückwärtsneigung zu einer Vorwärtsgeschwindigkeit und einer Rückwärtsgeschwindigkeit aufweist.

Die Aufgabe der vorliegenden Erfindung besteht darin, ein alternatives Verfahren zur Verzögerung der Arbeitsmaschine und eine verbesserte Arbeitsmaschine zu schaffen. Insbesondere soll die Fahrstabilität und Kontrollierbarkeit der Arbeitsmaschine beim Verzögern verbessert werden. Diese Aufgaben werden gelöst durch ein Verfahren mit den Merkmalen von Patentanspruch 1 und eine Arbeitsmaschine mit den Merkmalen von Anspruch 9. Vorteilhafte Ausführungsformen sind Gegenstand der abhängigen Ansprüche, der nachfolgenden Beschreibung sowie der Figuren.

Nach einem ersten Aspekt wird ein Verfahren zur Verzögerung einer Arbeitsmaschine bereitgestellt, wobei die Verzögerung der Arbeitsmaschine durch Auslenkung eines Joysticks aus einer Neutralposition erfolgt. Das Verfahren umfasst die Schritte: Erfassen einer Auslenkung des Joysticks aus der Neutralposition, Verzögern der Arbeitsmaschine nach Maßgabe der Auslenkung des Joysticks durch eine Änderung einer Übersetzung eines Getriebes, das im Antriebsstrang der Arbeitsmaschine angeordnet und über eine Fahrkupplung mit Rädern der Arbeitsmaschine antriebswirksam verbindbar ist, und Überwachen von Raddrehzahlen mittels einer elektronischen Steuereinheit, die mit Sensoren zum Erfassen von Raddrehzahlen an den Rädern der Arbeitsmaschine signalübertragend verbunden ist, wobei die Fahrkupplung geöffnet wird, wenn ein Schwellwert für mindestens eine Raddrehzahl einem kritischen Fahrzustand zugeordnet wird, wodurch die Räder der Arbeitsmaschine vom Antriebsstrang entkoppelt werden.

Ein kritischer Fahrzustand der Arbeitsmaschine liegt immer dann vor, wenn ein Schwellwert für mindestens eine Raddrehzahl beim Verzögern der Arbeitsmaschine erreicht wird, sodass dadurch ein instabiler Fahrbetrieb entstehen kann. Beispielsweise ist der Schwellwert für die Raddrehzahl des jeweiligen Rades geschwindigkeitsabhängig. Beispielsweise werden mehrere Raddrehzahlen verglichen, wobei der Schwellwert aus einer Differenz zwischen zwei Raddrehzahlen gebildet wird. Alternativ ist der Schwellwert für die Raddrehzahl des jeweiligen Rades Null, sodass beim Blockieren mindestens eines Rades die Fahrkupplung geöffnet wird.

Die Fahrkupplung im Antriebsstrang der Arbeitsmaschine ermöglicht ein Koppeln und Entkoppeln der angetriebenen Räder vom Getriebe und des damit verbundenen Antriebsmotors. Im geschlossenen Zustand der Fahrkupplung sind die Räder antriebswirksam am Antriebsstrang angebunden. Im geöffneten Zustand der Fahrkupplung sind die Räder vom Antriebsstrang entkoppelt. Durch die Entkopplung der Räder vom Antriebsstrang, werden die Räder nicht mehr über das Getriebe verzögert, sodass diese nicht blockieren, sondern frei rotieren können. Das verbessert die Lenkbarkeit der Arbeitsmaschine, insbesondere die Stabilität in Längs- und Querrichtung. Wenn die Räder der Arbeitsmaschine, beispielsweise auf rutschigem Untergrund blockieren, hat das mehrere Nachteile. Blockierte Räder können keine Seitenkräfte mehr übertragen, sodass die Arbeitsmaschine nicht mehr gelenkt werden kann. Ferner weist ein blockiertes Rad in der Regel eine schlechtere Bodenhaftung als ein kontrolliert verzögertes, jedoch rollendes, Rad auf. Durch ein blockiertes Rad kann sich der Bremsweg verlängern oder die Arbeitsmaschine in Schleudern geraten.

Der Joystick ist als verschwenkbarer oder verschiebbarer Hebel zu verstehen, der von einem Benutzer bedient wird, um die Arbeitsmaschine zu steuern. Durch Auslenkung des Joysticks in eine erste Richtung aus der Neutralposition wird die Arbeitsmaschine verzögert, also abgebremst. Ferner kann die Arbeitsmaschine durch Auslenkung des Joysticks in eine zweite Richtung, die entgegengesetzt zur ersten Richtung angeordnet ist, beschleunigt werden, sodass dadurch ein Vortrieb eingestellt wird. Beispielsweise beschleunigt die Arbeitsmaschine durch Drücken des Joysticks nach vorne, während das Ziehen des Joysticks nach hinten zu einer Verzögerung der Arbeitsmaschine führt. Dadurch werden der Fahrkomfort und die Steuerbarkeit der Arbeitsmaschine verbessert. Beispielsweise ist der Joystick in der Armlehne eine Sitzes für einen Benutzer angeordnet. Der Joystick ist signalübertragend mit der Steuereinheit verbunden, wobei die Steuereinheit ferner mit den Sensoren zum Erfassen von Raddrehzahlen, dem Getriebe und der Fahrkupplung verbunden ist. Insbesondere ist die Steuereinheit auch mit einem Antriebsmotor und einem Bremssystem der Arbeitsmaschine signalübertragend verbunden.

Die Steuereinheit ist dazu eingerichtet, Sensorsignale und Benutzereingaben zu empfangen, Steuersignale anhand der empfangenen Sensorsignale und Benutzereingaben zu erzeugen, und diese Steuersignale an die damit signalübertragenden Bauteile zu übermitteln. Die signalübertragende Verbindung kann entweder drahtlos oder drahtgebunden ausgebildet sein. Eine signalübertragende Verbindung ist eine kommunizierende Verbindung, bei der Signale als Schalt-, Steuer- oder Befehlssignale übermittelt werden. Die jeweilige Signalschnittstelle ermöglicht einen Datenaustausch und somit eine Kommunikation zwischen den darüber verbundenen Bauteilen. Die jeweilige Signalschnittstelle kann in das jeweilige Bauteil integriert bzw. integraler Bestandteil davon sein. Beispielsweise ist die Signalschnittstelle dazu eingerichtet, die Signaldaten in Form einer elektrischen Spannung oder eines elektrischen Stroms zu erfassen.

Gemäß einer Ausführungsform wird die Verzögerung der Arbeitsmaschine nach Maßgabe der Auslenkung des Joysticks durch ein Bremssystem fortgeführt, sobald die Fahrkupplung geöffnet wird. Insbesondere weist das Bremssystem ein Antiblockiersystem (ABS) auf. Mithin erfolgt die Verzögerung der Arbeitsmaschine bei geöffneter Fahrkupplung nicht mehr durch das Getriebe, sondern durch das ABS-geregelte Bremssystem, sodass die Räder höchstens kurzfristig blockieren können und in Intervallen weiterrollen, damit die Arbeitsmaschine die Lenkbarkeit und Stabilität nicht verliert. Gemäß einer Ausführungsform wird ein Bremsdruck an mindestens einem Rad, beispielsweise an allen Rädern, über ein elektronisch steuerbares Bremsventil des Bremssystems angepasst. Das Bremssystem umfasst insbesondere ABS-Ventile, die eine Bremsdruckerhöhung, -verringerung und -haltephase ermöglichen. Das Bremssystem übernimmt somit die Verzögerung der Arbeitsmaschine, immer dann, wenn bei der Verzögerung über den Antriebsstrang ein Schwellwert für mindestens eine Raddrehzahl erreicht wird, insbesondere ein ungewöhnlicher Radschlupf erfasst wird. Ungewöhnlich ist ein Radschlupf beispielsweise dann, wenn die Raddrehzahl eines Rades stark von den anderen Raddrehzahlen abweicht, nicht zu der Geschwindigkeit der Arbeitsmaschine passt und/oder Null beträgt, obwohl die Arbeitsmaschine in Bewegung ist.

Gemäß einer Ausführungsform wird das Getriebe während der Verzögerung mittels des Bremssystems entsprechend einer Geschwindigkeit der Arbeitsmaschine nachgeführt. Dies ist insbesondere für ein Wiedereinkuppeln und die damit einhergehende antriebswirksame Verbindung der Räder mit dem Antriebsstrang relevant. Wenn das Getriebe während der Verzögerung mittels Bremssystem entsprechend der Geschwindigkeit der Arbeitsmaschine nachgeführt wird, verbessert sich der Fahrkomfort für den Benutzer und die Steuerbarkeit der Arbeitsmaschine.

Gemäß einer Ausführungsform wird eine Feststellbremse der Arbeitsmaschine aktiviert, wenn der Joystick nach dem Erreichen eines Stillstandes der Arbeitsmaschine entweder für eine bestimmte Zeitdauer in der ausgelenkten Position gehalten wird oder in eine dafür vorgesehene Auslenkungsposition überführt wird. Mithin wird die Feststellbremse in der Bedienung mittels Joystick integriert, sodass eine separate Steuerung für die Feststellbremse entfallen kann. Beispielsweise wird die Feststellbremse aktiviert, wenn der Joystick nach dem Erreichen des Stillstandes der Arbeitsmaschine für mehrere Sekunden in der aus der Neutralposition ausgelenkten Position gehalten wird. Alternativ oder ergänzend wird die Feststellbremse aktiviert, wenn der Joystick nach dem Erreichen des Stillstandes der Arbeitsmaschine in einer vollständig ausgelenkten Position, insbesondere an einem Endanschlag, positioniert wird.

Gemäß einer Ausführungsform wird für jede Auslenkungsposition des Joysticks eine bestimmte Getriebeübersetzung und optional auch ein bestimmter Bremsdruck von der Steuereinheit eingestellt. Beispielsweise kann der Joystick stufenweise oder kontinuierlich ausgelenkt werden. Beispielsweise entspricht die Neutralposition des Joysticks einer 0%-Auslenkung, wobei eine maximale Auslenkungsposition des Joysticks einer 100%-Auslenkung entspricht. Für jede Auslenkungsposition des Joysticks wird eine Übersetzung des Getriebes eingestellt, wobei die darüber generierte Verzögerung der Arbeitsmaschine mit zunehmender Auslenkung des Joysticks ansteigt. Die Verzögerung der Arbeitsmaschine kann ab einer bestimmten Auslenkungsposition des Joysticks, beispielsweise ab einer 50%-Auslenkung, von dem Bremssystem unterstützt werden. Insbesondere erfolgt die Einstellung der Übersetzung und die Einstellung eines Bremsdrucks nach einer festen Kennlinie, ohne die Fahrzeuglast oder die Straßenneigung zu berücksichtigen. Daher führt eine bestimmte Auslenkungsposition des Joysticks nicht immer zum gleichen Verzögerungswert für die Arbeitsmaschine.

Gemäß einer Ausführungsform wird für jede Auslenkungsposition des Joysticks eine definierte Verzögerung der Arbeitsmaschine von der Steuereinheit eingestellt. Mithin ist für jede Auslenkungsposition des Joysticks eine definierte Verzögerung vorgesehen, sodass die Arbeitsmaschine, unabhängig von einer Beladung oder einer Steigung, stets die gleiche Verzögerung für eine bestimmte Auslenkungsposition des Joysticks erfährt. Beispielsweise kann die Verzögerung durch den Antriebsstrang auf einen bestimmten Wert begrenzt sein, um Schäden am Antriebsmotor und Getriebe zu vermeiden. Gemäß einer Ausführungsform wird die Verzögerung der Arbeitsmaschine durch Änderung der Übersetzung bei geschlossener Fahrkupplung auf einen dafür vorgesehenen Grenzwert begrenzt, wobei die Verzögerung der Arbeitsmaschine beim Erreichen des Grenzwerts durch Einstellen eines Bremsdrucks unterstützt wird. Mithin erfolgt die Grundverzögerung durch Einstellung der Getriebeübersetzung, wobei immer dann, wenn die gewünschte Verzögerung die maximal mögliche Verzögerung mittels Getriebe in der aktuellen Fahrsituation übersteigt, eine zusätzliche Verzögerung über das Bremssystem eingestellt wird, um die benötigte Verzögerung zu erreichen. Demnach bleibt die über den Joystick einstellbare Verzögerung unter allen Bedingungen konstant. Dadurch wird der Fahrkomfort und die Steuerbarkeit des Fahrzeugs weiter verbessert. Die Verzögerung der Arbeitsmaschine wird insbesondere mittels der Sensoren zum Erfassen der Raddrehzahlen an den Rädern überwacht. Über die Raddrehzahlen können die aktuelle Fahrzeuggeschwindigkeit und die aktuelle Verzögerung der Arbeitsmaschine berechnet werden. Die aktuelle Verzögerung der Arbeitsmaschine dient insbesondere als Grundlage für die Anpassung der Übersetzung und des Bremsdrucks.

Nach einem zweiten Aspekt wird eine Arbeitsmaschine bereitgestellt, umfassend einen Joystick zur Steuerung einer Verzögerung der Arbeitsmaschine, ein Getriebe, das im Antriebsstrang der Arbeitsmaschine angeordnet und über eine Fahrkupplung mit mehreren Rädern der Arbeitsmaschine antriebswirksam verbindbar ist, Sensoren zum Erfassen von Raddrehzahlen an den Rädern der Arbeitsmaschine und eine Steuereinheit, die mit dem Joystick, dem Getriebe, der Fahrkupplung und den Sensoren signalübertragend verbunden und dazu eingerichtet ist, die Fahrkupplung zu öffnen, wenn ein Schwellwert für mindestens eine Raddrehzahl einem kritischen Fahrzustand zugeordnet wird, wodurch die Räder der Arbeitsmaschine vom Antriebsstrang entkoppelt werden. Gemäß einer Ausführungsform umfasst die Arbeitsmaschine ferner ein Bremssystem, das mit der Steuereinheit signalübertragend verbunden ist, wobei die Steuereinheit dazu eingerichtet ist, die Verzögerung der Arbeitsmaschine bei geöffneter Fahrkupplung nach Maßgabe der Auslenkung des Joysticks durch das Bremssystem fortzuführen. Insbesondere weist das Bremssystem ein Antiblockiersystem auf. Die Arbeitsmaschine ist ein Offroad-Fahrzeug.

Die obigen Definitionen sowie Ausführungen zu technischen Effekten, Vorteilen und vorteilhaften Ausführungsformen des erfindungsgemäßen Verfahrens zur Verzögerung der Arbeitsmaschine gemäß dem ersten Aspekt gelten sinngemäß auch für die Arbeitsmaschine gemäß dem zweiten Aspekt, und umgekehrt.

Vorteilhafte Ausführungsformen der Erfindung sind in den nachfolgenden Zeichnungen dargestellt, wobei gleiche Elemente mit dem gleichen Bezugszeichen versehen sind. Es zeigen:
- Fig. 1: eine stark vereinfachte schematische Darstellung einer Arbeitsmaschine und
- Fig. 2: eine Blockdarstellung eines Verfahrens zur Verzögerung der Arbeitsmaschine nach Fig. 1.

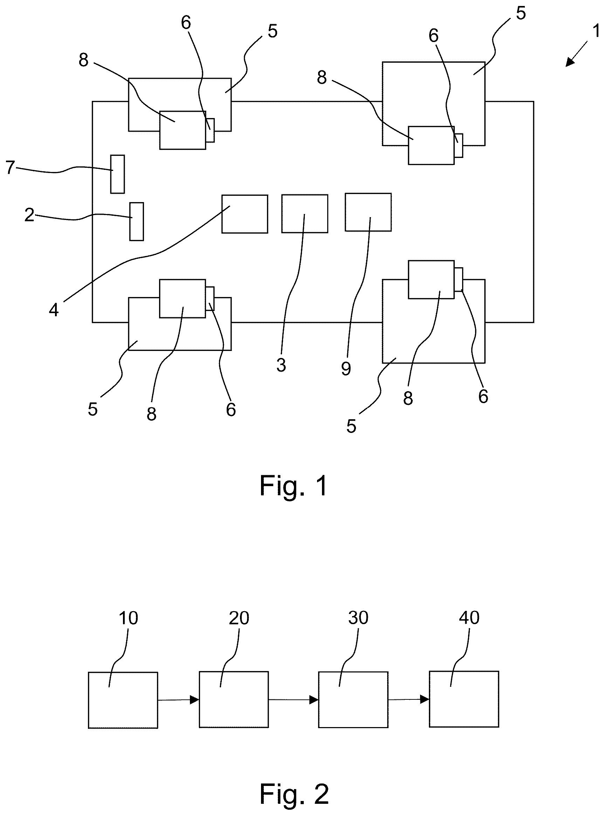

Fig. 1 zeigt eine Arbeitsmaschine 1, umfassend einen Antriebsmotor 9 zur Bereitstellung einer Antriebsleistung und ein damit antriebswirksam verbundenes Getriebe 3, das in einem Antriebsstrang der Arbeitsmaschine 1 angeordnet und über eine Fahrkupplung 4 mit mehreren Rädern 5 der Arbeitsmaschine 1 antriebswirksam verbindbar ist. Ferner ist ein Joystick 2 zur Steuerung eines Antriebs und einer Verzögerung der Arbeitsmaschine 1 vorgesehen. Wenn ein Benutzer die Arbeitsmaschine 1 verzögern möchte, verschiebt er den Joystick 2 aus einer Neutralposition in eine erste Richtung. Wenn der Benutzer die Arbeitsmaschine 1 beschleunigen möchte, verschiebt er den Joystick 2 aus der Neutralposition in eine zweite Richtung, die entgegengesetzt zur ersten Richtung ausgebildet ist.

Für jede Auslenkungsposition des Joysticks 2 ist eine bestimmte Antriebsleistung am Antriebsmotor 9 und eine bestimmte Getriebeübersetzung am Getriebe 3 vorgesehen. Insbesondere ist für jede Auslenkungsposition des Joysticks 2 eine definierte Beschleunigung und Verzögerung der Arbeitsmaschine 1 einstellbar. Wenn eine Verzögerung nicht allein durch den Antriebsstrang, insbesondere durch eine Änderung der Übersetzung des Getriebes 3, eingestellt werden kann, wird zusätzlich ein Bremssystem der Arbeitsmaschine 1 betätigt, um die Arbeitsmaschine 1 mit der gewünschten Verzögerung abzubremsen.

Die Arbeitsmaschine 1 ist als Offroad-Fahrzeug mit vier Rädern 5 ausgebildet. An jedem Rad 5 ist ein Sensor 6 zum Erfassen einer Raddrehzahl angeordnet. Die Sensoren 6 sind signalübertragend mit einer Steuereinheit 7 verbunden. Sensorsignale werden an die Steuereinheit 7 übermittelt und dort überwacht und ausgewertet. Die Steuereinheit 7 ist ferner mit dem Joystick 2, dem Getriebe 3, der Fahrkupplung 4 und dem Antriebsmotor 9 signalübertragend verbunden und dazu eingerichtet, Signale, insbesondere Benutzereingaben, zu verarbeiten und die damit verbundenen Bauteile entsprechend zu steuern und zu regeln.

Wenn beim Verzögern der Arbeitsmaschine 1 nach Maßgabe der Auslenkung des Joysticks 2 durch eine Änderung der Übersetzung des Getriebes 3 ein Schwellwert für mindestens eine Raddrehzahl einem kritischen Fahrzustand zugeordnet wird, öffnet die Steuereinheit 7 die Fahrkupplung 4, um die Räder 5 der Arbeitsmaschine 1 vom Antriebsstrang zu entkoppeln, sodass diese wieder frei drehen können. Dadurch wird ein Blockieren der Räder 5 verhindert und die Lenkbarkeit und Stabilität der Arbeitsmaschine 1 verbessert. Um den Antriebsstrang vor Überlastung zu schützen, kann die Verzögerung der Arbeitsmaschine 1 durch Änderung der Übersetzung des Getriebes 3 bei geschlossener Fahrkupplung 4 auf einen Grenzwert von 1,5m/s² begrenzt sein.

Damit der Verzögerungswunsch des Benutzers umgesetzt wird, wird die Verzögerung der Arbeitsmaschine 1 nach Maßgabe der Auslenkung des Joysticks 2 durch das Bremssystem fortgeführt, sobald die Fahrkupplung 4 geöffnet wird. Dazu wird von der Steuereinheit 7 ein Bremsdruck an jedem Rad 5 über ein elektronisch steuerbares Bremsventil 8 des Bremssystems angepasst. Das Bremssystem umfasst ein Antiblockiersystem (ABS), damit die Räder 5 bei einer Verzögerung über das Bremssystem nicht dauerhaft blockieren. Während der Verzögerung über das Bremssystem wird das Getriebe 3 entsprechend einer Geschwindigkeit der Arbeitsmaschine 1 nachgeführt, wodurch ein späteres Einkoppeln verbessert wird.

Um im Stillstand der Arbeitsmaschine 1 eine Feststellbremse zu aktivieren, wird der Joystick 2 nach dem Erreichen des Stillstandes für eine bestimmte Zeitdauer in der ausgelenkten Position gehalten. Alternativ wird der Joystick 2 im Stillstand der Arbeitsmaschine 1 in eine dafür vorgesehene Auslenkungsposition überführt, um die Feststellbremse zu aktivieren.

Fig. 2 zeigt das Verfahren zur Verzögerung einer Arbeitsmaschine 1 gemäß Fig. 1 in einem Blockschaltbild. Die Verzögerung der Arbeitsmaschine 1 erfolgt durch Auslenkung des Joysticks 2 aus der Neutralposition in eine erste Richtung.

In einem ersten Verfahrensschritt 10 wird die Auslenkung des Joysticks 2 aus der Neutralposition erfasst. Dazu ist beispielsweise ein Positionssensor am Joystick 2 angeordnet und mit der Steuereinheit 7 signalübertragend verbunden.

In einem zweiten Verfahrensschritt 20 wird die Arbeitsmaschine 1 nach Maßgabe der Auslenkung des Joysticks 2 durch eine Änderung der Übersetzung des Getriebes 3 verzögert. Während der Verzögerung werden durch Sensoren 6 erfasste Raddrehzahlen am jeweiligen Rad 5 an die elektronische Steuereinheit 7 übermittelt und ausgewertet. Beispielsweise vergleicht die Steuereinheit 7 die erfassten Raddrehzahlen mit auf einem Datenspeicher hinterlegten Raddrehzahlen, die für die Geschwindigkeit der Arbeitsmaschine 1 typisch sind.

Wenn ein Schwellwert für mindestens eine Raddrehzahl einem kritischen Fahrzustand zugeordnet wird, öffnet die Steuereinheit 7 gemäß einem dritten Verfahrensschritt 30 die Fahrkupplung 4, um die Räder 5 der Arbeitsmaschine 1 vom Antriebsstrang zu entkoppeln. Ansonsten wird die Arbeitsmaschine 1 nach Maßgabe der Auslenkung des Joysticks 2 weiter über das Getriebe 3 verzögert.

In einem vierten Verfahrensschritt 40 wird, sobald die Fahrkupplung 4 geöffnet ist, die Verzögerung der Arbeitsmaschine 1 nach Maßgabe der Auslenkung des Joysticks 2 durch das ABS-geregelte Bremssystem fortgeführt.

### Bezugszeichen

- 1: Arbeitsmaschine
- 2: Joystick
- 3: Getriebe
- 4: Fahrkupplung
- 5: Rad
- 6: Sensor
- 7: Steuereinheit
- 8: Bremsventil
- 9: Antriebsmotor
- 10: erster Verfahrensschritt
- 20: zweiter Verfahrensschritt
- 30: dritter Verfahrensschritt
- 40: vierter Verfahrensschritt

## Patentansprüche

1. Verfahren zur Verzögerung einer Arbeitsmaschine (1), wobei die Verzögerung der Arbeitsmaschine (1) durch Auslenkung eines Joysticks (2) aus einer Neutralposition erfolgt, umfassend folgende Schritte:
• Erfassen einer Auslenkung des Joysticks (2) aus der Neutralposition,
• Verzögern der Arbeitsmaschine (1) nach Maßgabe der Auslenkung des Joysticks (2) durch eine Änderung einer Übersetzung eines Getriebes (3), das im Antriebsstrang der Arbeitsmaschine (1) angeordnet und über eine Fahrkupplung (4) mit Rädern (5) der Arbeitsmaschine (1) antriebswirksam verbindbar ist, und
• Überwachen von Raddrehzahlen mittels einer elektronischen Steuereinheit (7), die mit Sensoren (6) zum Erfassen von Raddrehzahlen an den Rädern (5) der Arbeitsmaschine (1) signalübertragend verbunden ist,
• wobei die Fahrkupplung (4) geöffnet wird, wenn ein Schwellwert für mindestens eine Raddrehzahl einem kritischen Fahrzustand zugeordnet wird, wodurch die Räder (5) der Arbeitsmaschine (1) vom Antriebsstrang entkoppelt werden.

2. Verfahren nach Anspruch 1, wobei die Verzögerung der Arbeitsmaschine (1) nach Maßgabe der Auslenkung des Joysticks (2) durch ein Bremssystem fortgeführt wird, wenn die Fahrkupplung (4) geöffnet wird.

3. Verfahren nach Anspruch 2, wobei ein Bremsdruck an mindestens einem Rad (5) über ein elektronisch steuerbares Bremsventil (8) des Bremssystems angepasst wird.

4. Verfahren nach Anspruch 2 oder 3, wobei das Getriebe (3) während der Verzögerung mittels des Bremssystems entsprechend einer Geschwindigkeit der Arbeitsmaschine (1) nachgeführt wird.

5. Verfahren nach einem der vorhergehenden Ansprüche, wobei eine Feststellbremse der Arbeitsmaschine (1) aktiviert wird, wenn der Joystick (2) nach dem Erreichen eines Stillstandes der Arbeitsmaschine (1) entweder für eine bestimmte Zeitdauer in der ausgelenkten Position gehalten wird oder in eine dafür vorgesehene Auslenkungsposition überführt wird.

6. Verfahren nach einem der vorhergehenden Ansprüche, wobei für jede Auslenkungsposition des Joysticks (2) zumindest eine bestimmte Getriebeübersetzung von der Steuereinheit (7) eingestellt wird.

7. Verfahren nach einem der vorhergehenden Ansprüche, wobei für jede Auslenkungsposition des Joysticks (2) eine definierte Verzögerung der Arbeitsmaschine (1) von der Steuereinheit (7) eingestellt wird.

8. Verfahre nach Anspruch 7, wobei die Verzögerung der Arbeitsmaschine (1) durch Änderung der Übersetzung bei geschlossener Fahrkupplung (4) auf einen dafür vorgesehenen Grenzwert begrenzt wird, wobei die Verzögerung der Arbeitsmaschine (1) beim Erreichen des Grenzwerts durch Einstellen eines Bremsdrucks unterstützt wird.

9. Arbeitsmaschine (1), umfassend
• einen Joystick (2) zur Steuerung einer Verzögerung der Arbeitsmaschine (1),
• ein Getriebe (3), das in einem Antriebsstrang der Arbeitsmaschine (1) angeordnet und über eine Fahrkupplung (4) mit mehreren Rädern (5) der Arbeitsmaschine (1) antriebswirksam verbindbar ist,
• Sensoren (6) zum Erfassen von Raddrehzahlen an den Rädern (5) der Arbeitsmaschine (1) und
• eine elektronische Steuereinheit (7), die mit dem Joystick (2), dem Getriebe (3), der Fahrkupplung (4) und den Sensoren (6) signalübertragend verbunden und dazu eingerichtet ist, die Fahrkupplung (4) zu öffnen, wenn ein Schwellwert für mindestens eine Raddrehzahl einem kritischen Fahrzustand zugeordnet wird, wodurch die Räder (5) der Arbeitsmaschine (1) vom Antriebsstrang entkoppelt werden.

10. Arbeitsmaschine (1) nach Anspruch 9, ferner umfassend ein Bremssystem, das mit der Steuereinheit (7) signalübertragend verbunden ist, wobei die Steuereinheit (7) dazu eingerichtet ist, die Verzögerung der Arbeitsmaschine (1) bei geöffneter Fahrkupplung (4) nach Maßgabe der Auslenkung des Joysticks (2) durch das Bremssystem fortzuführen.
